# EUROPÄISCHE PATENTSCHRIFT

(11) **EP 0 749 891 B1**
(45) Veröffentlichungstag und Bekanntmachung des Hinweises auf die Patenterteilung: **03.03.1999**
(21) Anmeldenummer: 96107504.1
(22) Anmeldetag: 10.05.1996
(51) Int. Cl.: B62D 25/14, B60T 7/06, B60R 21/09

(54) **Sicherheitsanordnung im Fussraum eines Kraftwagens**
Security arrangement in motor vehicle footwells
Montage de sécurité pour l'espace des pieds dans un véhicule automobile

(30) Priorität: 23.06.1995 DE 19522398
(43) Veröffentlichungstag der Anmeldung: 27.12.1996
(73) Patentinhaber: DAIMLER-BENZ AKTIENGESELLSCHAFT, 70567 Stuttgart (DE)
(72) Erfinder: Patzelt, Helmut, 71394 Kernen (DE); Klemm, Eberhard, 73732 Esslingen (DE); Wessels, Norbert, 70619 Stuttgart (DE); Schnabel, Alfred, 75382 Althengstett (DE)

(56) Entgegenhaltungen:
- EP-A- 0 029 757
- DE-A- 3 904 616

## Beschreibung

Die Erfindung bezieht sich auf eine Sicherheitsanordnung im Fußraum eines Kraftwagens nach der im Oberbegriff des Hauptanspruches angegebenen Art.

Eine derartige Sicherheitsanordnung ist von Serienkraftwagen bekannt, deren Lenksäule nach einem aus der DE 32 45 741 C2 bekannten Prinzip an einem Strebenpaar aufgehängt ist. Die vordere Strebe der Mantelrohraufhängung weist hierbei einen erheblichen Abstand zur Stirnwand des Fußraums auf. Daher kann es selbst bei übermäßiger Eindrückung der Stirnwand bei einem Crash nicht ohne weiteres zu einer Kollision eines auf der Stirnwand angebrachten Pedalwerks mit der vorderen Strebe der Aufhängung kommen.

Aus konstruktiven Gründen kann es jedoch erforderlich sein, die vordere Strebe der Aufhängung unter einem leicht schräg nach vorn geneigten Verlauf anzuordnen, wodurch es zu einer seitlichen Teilüberdeckung ihres unteren Längenbereiches mit dem Pedalwerk kommen kann. Durch die Schrägstellung der Strebe kann es zudem aus schwingungstechnischen Gründen erforderlich sein, die Strebe etwas biegesteifer auszubilden.

Infolge dieser konstruktiven Änderungen können erschwerte Crashbedingungen, z.B. bei einem Offset-Crash mit höherer Geschwindigkeit gegen eine deformierbare Barriere, zu einer unerwünschten elastischen Aufstellbewegung der Lenksäule führen, die nur kurzzeitig andauert. Die Aufstellbewegung kommt dadurch zustande, daß das durch Eindrückung der Stirnwand rückverlagerte Pedalwerk, insbesondere mit seinem seitlich auskragenden Achsbereich, an der vorderen Längsseite der Strebe hängenbleibt bzw. aufläuft, wodurch die Strebe stoßartig belastet wird. Bevor die Strebe infolge dieser Stoßwirkung einknickt, wird der Stoßimpuls in eine Aufstellbewegung der Lenksäule umgewandelt, wodurch auch das Lenkrad in für den Fahrer ungünstiger Weise verlagert wird.

Der Erfindung liegt die Aufgabe zugrunde, die Sicherheits- anordnung im Fußraum eines Kraftwagens nach der gattungsgemäßen Art dahingehend weiterzuentwickeln, daß trotz der genannten konstruktiven Änderungen auch unter erschwerten Crashbedingungen ein kurzzeitiges Aufrichten der Lenksäule zuverlässig verhindert werden kann.

Die erfindungsgemäße Lösung dieser Aufgabe ergibt sich aus den Merkmalen des Hauptanspruches.

Aus den übrigen Ansprüchen gehen vorteilhafte Ausgestaltungen der Erfindung hervor.

Nachfolgend ist ein Ausführungsbeispiel der Erfindung anhand einer zeichnerischen Darstellung näher erläutert.

In dieser Darstellung zeigen:
- Fig. 1: eine Seitenansicht der Sicherheitsanordnung von links,
- Fig. 2: eine perspektivische Schrägansicht der Sicherheitsanordnung von vorn,
- Fig. 3: ein Pedal der Sicherheitsanordnung in Seitenansicht,
- Fig. 4: ein Lagerende des Pedals, das teilweise aufgebrochen gezeigt ist, und
- Fig. 5: einen Querschnitt gemäß der Schnittlinie V-V in Fig. 3.

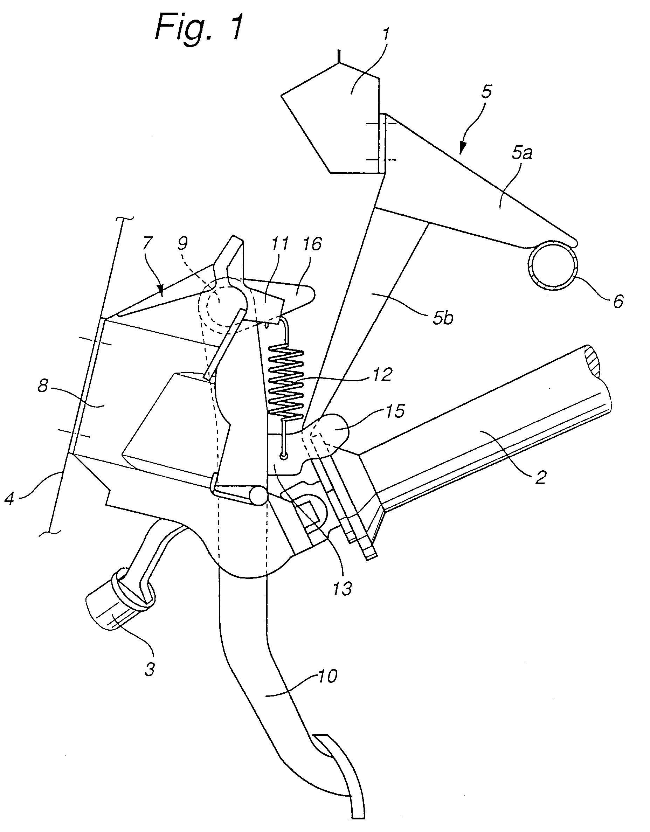

In der Seitenansicht nach Fig. 1 ist ein Querträger 1 der Karosserie eines Kraftwagens zu sehen, der sich unterhalb der nicht gezeigten Frontscheibe über die gesamte Breite des Innenraumes erstreckt. Vor dem Mantelrohr 2 einer Sicherheitslenksäule, deren gelenkig mit einem Wellrohr 3 oder dgl. verbundene Lenkspindel durch eine nicht gezeigte Öffnung in einer vorderen Stirnwand 4 der Karosserie hindurch mit einem Lenkgetriebe verbunden ist, befindet sich eine Aufhängung 5 für das Mantelrohr 2. Diese Aufhängung 5 umfaßt eine hintere Strebe 5a und eine vordere Strebe 5b, die zu einer winkelsteifen Baueinheit miteinander verbunden sind. Das vordere Ende der hinteren Strebe 5a ist stabil, z.B. durch Schrauben, an der Rückseite des Querträgers 1 befestigt. Vom Querträger 1 ausgehend erstreckt sich die Strebe 5a nach hinten, wobei sie unter einem Winkel von etwa 20° zur Horizontalen nach unten geneigt ist. In ihrem hinteren Endbereich wird die Strebe 5a von einem weiteren Querträger 6 abgestützt, auf dem sie aufliegt. Dieser Querträger 6 besteht aus einem runden Rohr, das sich unterhalb der nicht gezeigten Instrumententafel des Kraftwagens in dessen Breitenrichtung erstreckt und mit seinen Enden an seitlichen Karosseriewänden des Innenraums festgelegt ist. Mittels der hinteren Strebe 5a ist das Mantelrohr 2 in einem nicht sichtbaren oberen Endbereich gehalten.

Die Strebe 5b erstreckt sich vom befestigten vorderen Ende der Strebe 5a ausgehend nach unten, wobei sie unter einem Winkel von etwa 30° zur Vertikalen schräg nach vorn geneigt ist. Dabei verjüngt sie sich von oben nach unten zunehmend bis in einem unteren Endbereich die Wanddicke ihres Blechs erreicht wird. Dieser Endbereich ist rechtwinklig zur Längsachse des Mantelrohrs 2 abgebogen und gabelförmig gestaltet. Auf diesem Endbereich der Strebe 5b liegt die Ringstirnseite eines konisch verdickten Fußes des Mantelrohrs 2 auf und der Fuß ist im Auflagebereich mit dem Endbereich der Strebe 5b verschraubt.

Beide Streben 5a und 5b sind als Blechbiegeteile mit im wesentlichen U-förmigem bzw. rechteckförmigem Querschnitt ausgebildet, die aufgrund ihrer nicht unerheblichen Wandstärke und Querschnittsbreite eine stabile und schwingungsfeste Aufhängung 5 für das Mantelrohr 2 bilden.

Unmittelbar seitlich neben der Strebe 5b ist ein Pedalwerk 7 angeordnet, dessen Pedallagerbock 8 auf der Stirnwand 4 bzw. Spritzwand der Karosserie aufliegend verschraubt ist. Der Pedallagerbock 8 trägt in seinem oberen Endbereich einen seitlich auskragenden Achsbolzen 9, auf dem ein Bremspedal 10 mit dem oberen Ende seines Hebelarmes schwenkbar gelagert ist. Nahe dem Achsbolzen 9 steht vom Pedallagerbock 8 ein Einhängungswiderlager 11 nach hinten ab, in dessen Einhängungsloch ein oberer Schenkel einer Schraubenzugfeder 12 eingehängt ist. In einem angepaßten Abstand zum Einhängungswiderlager 11 steht vom Hebelarm des Bremspedals 10 ein Einhängungswiderlager 13 aus Blech nach hinten ab, in dessen Einhängungsloch der untere Federschenkel der Schraubenzugfeder 12 eingehängt ist. Somit wird das Bremspedal 10 durch die auseinandergezogene Schraubenzugfeder 12 im Uhrzeigergegensinn schwenkbelastet und nach dem Loslassen des Bremspedals 10 stets in seine Ausgangsstellung hochbewegt.

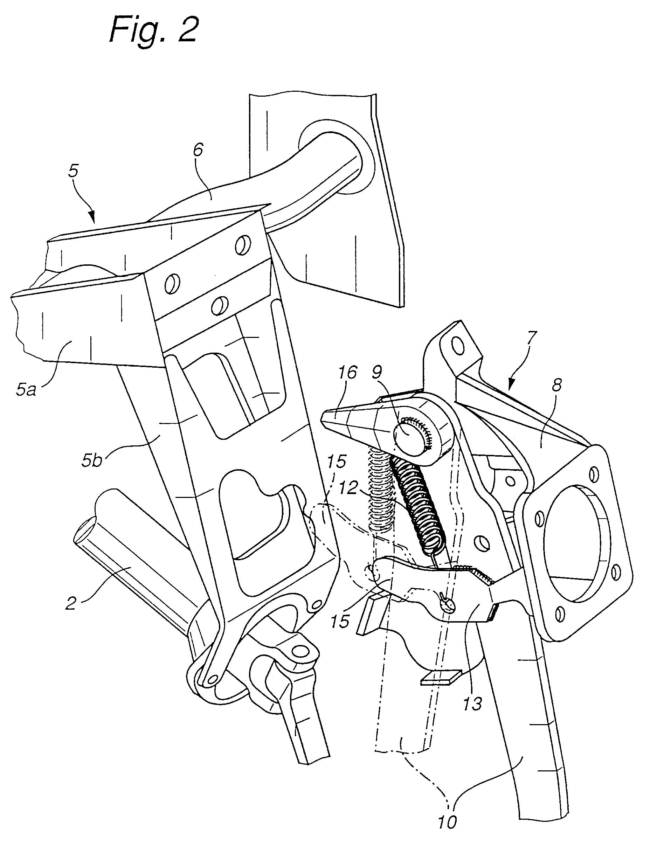

Wie in der Seitenansicht nach Fig. 1 zu erkennen ist, liegt das Pedalwerk 7 bei getretenem Bremspedal 10 nahezu vollständig vor der Strebe 5b. Wird bei einem starken Frontalcrash die Stirnwand 4 der Karosserie eingedrückt, so wird das auf der Stirnwand 4 befestigte Pedalwerk 7 entsprechend nach hinten verlagert, wobei diese Verlagerung relativ zur Aufhängung 5 erfolgt. Da das Pedalwerk 7 in einem geringen seitlichen Abstand neben der Strebe 5b liegt, wie in Verbindung mit Fig. 2 zu erkennen ist, kann es dabei an der Strebe 5b hängenbleiben und die Strebe 5b zunächst in ihrem unteren Längenbereich nach hinten durchbiegen. Dabei käme es kurzzeitig zu einer Absenkbewegung des unteren Endbereiches des Mantelrohrs 2, durch welche sein oberer Endbereich entsprechend in eine steiler aufgerichtete Stellung angehoben würde. Dies wäre auch aufgrund der Mitverlagerung des Lenkrades mit einer Erhöhung des Verletzungsrisikos für den Fahrer verbunden.

Um im Crashfalle ein Abknicken der Strebe 5b im Mittelbereich sicherzustellen, ohne daß es zu einem kurzzeitigen Aufbäumen des Mantelrohrs 2 kommt, sind Abweismittel am Pedalwerk 7 angeordnet, durch welches das Pedalwerk 7 bei crashbedingter Rückverlagerung desselben an der Strebe 5b vorbeigeführt wird. Die Anordnung der Abweismittel am Pedalwerk 7 ist unproblematischer als deren Anordnung an der Strebe 5b, da das Biegeverhalten der Strebe 5b unverändert bleibt. Zudem läßt sich eine Ausrichtung der Abweismittel durch Bewegungskoppelung mit dem Bremspedal 10 realisieren, wodurch eine besonders kompakte Gestaltung der Abweismittel möglich wird.

Als unteres Abweismittel ist ein Abweisblech 15 vorgesehen, das einteilig mit dem Blech des Einhängungswiderlagers 13 ausgebildet und als Verlängerung desselben in Zungenform nach hinten auskragt. Dadurch liegt es selbst bei getretenem Bremspedal 10 unter seitlicher Überdeckung zum unteren Endbereich der Strebe 5b, wobei es schräg auf die gegenüberliegende Seitenwand der Strebe 5b zu läuft.

Es versteht sich, daß das Abweisblech 15 aus ausreichend dickem Blech besteht, um die Belastung einer seitlichen Abstützung an der Strebe 5b aufnehmen zu können. Auch ist sie durch eine Schweißnaht auf der Breitseite des Hebelarms des Bremspedals 10 fest mit diesem verbunden.

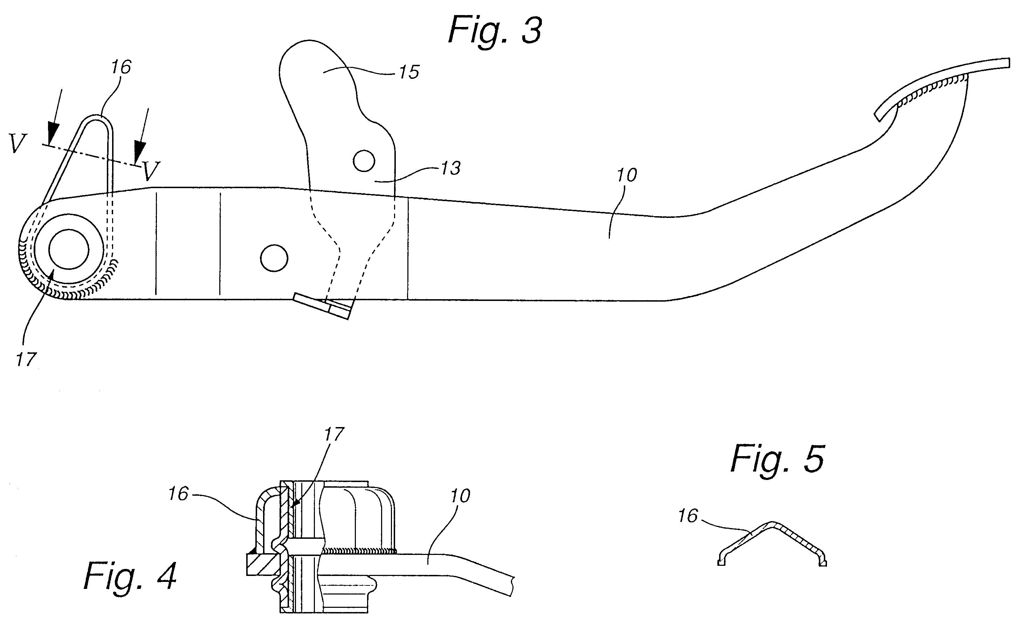

Als oberes Abweismittel ist eine Abweislanze 16 vorgesehen, die den zur Strebenseite auskragenden Endbereich des Achsbolzens 9 an seinem Umfang umschließt. Wie in Verbindung mit der Einzeldarstellung des Bremspedals 10 nach Fig. 3 sowie den Details nach Fig. 4 und 5 zu erkennen ist, besteht die Abweislanze 16 aus einer tiefgezogenen Halbschale aus dickem Blech, welche in einem Endbereich als Ringhülse den Umfang einer seitlich vom Hebel des Bremspedals 10 abstehenden Nabenanordnung 17 zur Lagerung auf dem Achsbolzen 9 umschließt und an ihrem Umfang mit dem Hebel des Bremspedals 10 verschweißt ist. Dadurch wird sie analog zum Abweisblech 15 stets mit dem Bremspedal 10 bewegt. Von diesem Ringhülsenbereich ausgehend erstreckt sich die Abweislanze 16 als lanzettliche Haube etwa rechtwinklig zur Längserstreckung des Pedalhebels nach hinten, wobei sie sich zunehmend bis zu einer abgerundeten Spitze verjüngt. In diesem auskragenden Längenbereich weist sie somit eine Keilform auf, wobei sie entlang ihrer der Strebe 5b zugewandten Seite eine scharfkantige Erhebung aufweist.

Aufgrund der vorbeschriebenen Gestaltung wirkt die Abweislanze 16 bei crashbedingter Rückverlagerung des Pedalwerks 7 seitlich stauchend mit einer Sollbiegezone der Strebe 5b in deren Mittelbereich zusammen, da ihre scharfkantige Erhebung sich zunehmend in die Seitenwand der Strebe 5b einschneidet bzw. im Sinne einer seitlichen Stauchung eingräbt. Diese Reduzierung des Biegewiderstandes der Strebe 5b fördert somit gezielt das Einknicken derselben im Mittelbereich, wie es zur Absenkung der Sicherheitslenksäule erwünscht ist.

## Patentansprüche

1. Sicherheitsanordnung im Fußraum eines Kraftwagens mit einer von einem Querträger (1) in den Fußraum herunterhängenden Strebe (5b), mit einer Aufhängung für das Mantelrohr (2) einer Sicherheitslenksäule, deren crashbedingte Durchbiegung mit einer Anhebung des vorderen Mantelrohrendes verbunden ist, wobei seitlich neben der Strebe (5b) auf einer den Fußraum vorn begrenzenden Stirnwand (4) der Karosserie ein Pedalwerk (7) angeordnet ist,
**dadurch gekennzeichnet,**
daß sich das Pedalwerk (7) zumindest mit einem Teil seiner Länge bis vor die Strebe (5b) erstreckt, und daß am Pedalwerk (7) und/oder an der Strebe (5b) mindestens ein seitlich abstützendes Abweismittel, beispielsweise Abweisblech (15) oder Abweislanze (16) angeordnet ist, durch welches das Pedalwerk (7) bei crashbedingter Rückverlagerung an der Strebe (5b) vorbeigeführt wird.

2. Sicherheitsanordnung nach Anspruch 1,
**dadurch gekennzeichnet,**
daß von der zur Strebe (5b) benachbarten Seite des Pedals, beispielsweise des Bremspedals (10) ein Abweisblech (15) absteht, das die Strebe (5b) seitlich überdeckt.

3. Sicherheitsanordnung nach Anspruch 2,
**dadurch gekennzeichnet,**
daß sich das Abweisblech (15) schräg auf die Seite der Strebe (5b) zu erstreckt.

4. Sicherheitsanordnung nach Anspruch 2,
**dadurch gekennzeichnet,**
daß das Abweisblech (15) als Einhängungswiderlager für eine Rückholfeder, beispielsweise Schraubenzugfeder (12) des Pedals (Bremspedals 10) ausgebildet ist und im unteren Endbereich der Strebe (5b) vom Pedal (Bremspedal 10) absteht.

5. Sicherheitsanordnung nach Anspruch 1,
**dadurch gekennzeichnet,**
daß das Pedalwerk (7) im vorderen oberen Endbereich eine Achse, beispielsweise den Achsbolzen (9) zur Schwenklagerung eines Pedals (Bremspedals 10) aufweist, die zur Strebenseite auskragt, und daß auf der Achse (Achsbolzen 9) eine Abweislanze (16) aus Blech angeordnet ist, die bei crashbedingter Rückverlagerung des Pedalwerks (7) seitlich an der Strebe (5b) aufläuft.

6. Sicherheitsanordnung nach Anspruch 5,
**dadurch gekennzeichnet,**
daß die Abweislanze (16) bei crashbedingter Rückverlagerung des Pedalwerks (7) seitlich stauchend mit einer Sollbiegezone der Strebe (5b) zusammenwirkt.

7. Sicherheitsanordnung nach Anspruch 5,
**dadurch gekennzeichnet,**
daß die Abweislanze (16) als sich zur Spitze hin keilförmig verjüngende Abdeckhaube ausgebildet ist.

8. Sicherheitsanordnung nach Anspruch 7,
**dadurch gekennzeichnet,**
daß der Endbereich der Achse (Achsbolzen 9) zumindest weitgehend ringförmig von der Abweislanze (16) umschlossen ist, wobei die Abweislanze (16) mit dem Pedal (Bremspedal 10) bewegungsgekoppelt ist.

## Claims

1. A safety arrangement in the footwell of a motor vehicle with a brace (5b) suspended from a cross member (1) in the footwell, with a suspension for a jacket tube (2) forming part of a safety steering column, the bending of which due to a crash is accompanied by a lifting of the front end of the jacket tube, whereby a pedal mechanism (7) is positioned next to the brace (5b) on a front wall (4) forming part of the bodywork and delimiting the front of the footwell,
**characterised in that**,
at least part of the pedal mechanism (7) extends to the brace (5b), and that at least one laterally supporting deflector means, for example a deflector plate (15) or a deflector lance (16), is positioned on the pedal mechanism (7) and/or the brace (5b) and cause the pedal mechanism (7) to avoid the brace (5b) if it is pushed backwards in the event of a crash.

2. A safety arrangement in accordance with Claim 1,
**characterised in that**,
protruding from the side of the pedal, for example the brake pedal (10), next to the brace (5b) is a deflector plate (15) which laterally covers the brace (5b).

3. A safety arrangement in accordance with Claim 2,
**characterised in that**,
the deflector plate (15) extends at an angle to the side of the brace (5b).

4. A safety arrangement in accordance with Claim 2,
**characterised in that**,
the deflector plate (15) is designed as a suspended counter bearing for a restoring spring, for example a screw tension spring (12), on the pedal (brake pedal (10)) and protrudes from the pedal (brake pedal (10)) at the lower end of the brace (5b).

5. A safety arrangement in accordance with Claim 1,
**characterised in that**,
the front upper end of the pedal mechanism (7) has a pivot, for example the pivot pin (9) which supports a pedal (brake pedal (10)), which projects towards the side of the brace, and that on this pivot (pivot pin (9)) is positioned a deflector lance (16) made of metal plate which runs into the brace (5b) if the pedal mechanism (7) is pushed backwards in the event of a crash.

6. A safety arrangement in accordance with Claim 5,
**characterised in that**,
when the pedal mechanism (7) is pushed backwards in a crash, the deflector lance (16) together with pre-determined bending zone on the brace (5b) has a compression effect.

7. A safety arrangement in accordance with Claim 5,
**characterised in that**,
the deflector lance (16) is designed as a cover which tapers towards its tip in a wedge shape.

8. A safety arrangement in accordance with Claim 7,
**characterised in that**,
the end of the pivot (pivot pin (9)) is at least largely surrounded in a ring shape by the deflector lance (16), whereby the deflector lance (16) is connected to the pedal (brake pedal (10)) in such a way that it can move.

## Revendications

1. Dispositif de sécurité prévu dans l'espace des pieds d'un véhicule automobile, comprenant une entretoise (5b) suspendue à une traverse (1) et s'étendant vers le bas dans l'espace des pieds, une suspension pour le tube-enveloppe (2) d'une colonne de direction de sécurité, suspension dont le fléchissement, produit par un accident, est lié à un soulèvement de l'extrémité avant du tube-enveloppe, avec disposition d'un mécanisme de pédale (7) latéralement à côté de l'entretoise (5b) sur une paroi avant (4) de la carrosserie qui délimite l'espace des pieds à l'avant, caractérisé en ce que le mécanisme de pédale (7) s'étend par une partie au moins de sa longueur jusque devant l'entretoise (5b), et qu'au moins un moyen de déviation s'appuyant latéralement, par exemple un morceau de tôle de déviation (15) ou une lance de déviation (16), est disposé sur le mécanisme de pédale (7) et/ou sur l'entretoise (5b), moyen de déviation par lequel le mécanisme de pédale (7), lorsqu'il est déplacé vers l'arrière par suite d'un accident, est guidé pour passer devant l'entretoise (5b).

2. Dispositif de sécurité selon la revendication 1, caractérisé en ce qu'un morceau de tôle de déviation (15) dépasse du côté de la pédale, de la pédale de frein (10) par exemple, qui est voisin de l'entretoise (5b), le morceau de tôle étant disposé à recouvrement latéral avec l'entretoise (5b).

3. Dispositif de sécurité selon la revendication 2, caractérisé en ce que le morceau de tôle de déviation (15) s'étend obliquement vers le côté de l'entretoise (5b).

4. Dispositif de sécurité selon la revendication 2, caractérisé en ce que le morceau de tôle de déviation (15) est réalisé comme une patte d'accrochage d'un ressort de rappel, par exemple d'un ressort hélicoïdal de traction (12), de la pédale (pédale de frein 10), et dépasse de la pédale (pédale de frein 10) à la hauteur de la partie terminale inférieure de l'entretoise (5b).

5. Dispositif de sécurité selon la revendication 1, caractérisé en ce que le mécanisme de pédale (7) présente dans sa portion terminale supérieure, située à l'avant , un axe, par exemple le tourillon (9) pour le montage oscillant d'une pédale (pédale de frein 10), axe qui fait saillie du côté de l'entretoise, et qu'une lance de déviation (16) en tôle est disposée sur cet axe (tourillon 9), lance qui, lorsque le mécanisme de pédale (7) est déplacé en arrière par suite d'un accident, monte latéralement sur l'entretoise (5b).

6. Dispositif de sécurité selon la revendication 5, caractérisé en ce que la lance de déviation (16) coopère, lorsque le mécanisme de pédale (7) est déplacé en arrière par suite d'un accident, avec une zone prévue pour la flexion de l'entretoise (5b), en exerçant un effet de refoulement sur elle.

7. Dispositif de sécurité selon la revendication 5, caractérisé en ce que la lance de déviation (16) est réalisée sous forme d'un capot de recouvrement qui se rétrécit en forme de coin vers son bout.

8. Dispositif de sécurité selon la revendication 7, caractérisé en ce que la portion terminale de l'axe (tourillon 9) est entourée au moins dans une large mesure annulairement par la lance de déviation (16), laquelle est coupée cinétiquement à la pédale (pédale de frein 10).
